# DEMANDE DE BREVET EUROPEEN

(11) **EP 4 582 711 A1**
(43) Date de publication de la demande: **09.07.2025**
(21) Numéro de dépôt: 25150276.1
(22) Date de dépôt: 06.01.2025
(51) Int. Cl.: F16C 23/00, F16C 29/00, F16C 29/02, F16C 41/00, F16C 31/02, F16C 31/04, G01N 11/00

(54) **PALIER DE GUIDAGE À PLUSIEURS POINTS DE MESURE DE PRESSION, SYSTÈME DE MESURE DE LA VISCOSITÉ OU DU NOMBRE DE REYNOLDS D'UN FLUIDE, À PERCHE GUIDÉE PAR LE PALIER, APPLICATION AU SUIVI EN BIOPRODUCTION**

(30) Priorité: 08.01.2024 FR 2400143
(71) Demandeur: Commissariat à l'Energie Atomique et aux Energies Alternatives, 75015 Paris (FR)
(72) Inventeur: DELEVOYE, Elisabeth, 38054 GRENOBLE CEDEX 09 (FR); CAROFF, Tristan, 38054 GRENOBLE CEDEX 09 (FR); ELHORGA, Vincent, 38054 GRENOBLE CEDEX 09 (FR)
(74) Mandataire: Ipsilon NNY

(57) **Abrégé**

Palier de guidage à plusieurs points de mesure de pression, Système de mesure de la viscosité ou du nombre de Reynolds d'un fluide, à perche guidée par le palier, Application au suivi en bioproduction.

L'invention concerne un palier de guidage (10) d'axe central (X), comprenant :
- une bague (11), destinée à être montée serré dans une structure de maintien, dont la surface interne est adaptée pour assembler avec un ajustement avec jeu, et de préférence guider en translation selon l'axe X, un tube destiné à constituer une perche de mesure;
- un élément d'angulation (12), formé intégralement ou fixé à l'intérieur de la surface interne de la bague en faisant saillie à l'intérieur de celle-ci, de sorte à former un axe d'angulation du tube par rapport à l'axe X;
- une pluralité de capteurs de pression (13.1-13.12) adaptés chacun pour mesurer un point de pression exercée par un point d'appui du tube dans une de ses positions angulées, les capteurs de pression étant répartis le long de la surface interne de la bague, de part et d'autre de l'élément d'angulation.

## Description

### Domaine technique

La présente invention concerne le domaine de l'instrumentation de mesure de pression, plus particulièrement dédiée à la connaissance de l'état d'un fluide.

Elle vise notamment à apporter une solution fiable, précise et rapide de la mesure de la viscosité et/ou du nombre de Reynolds d'un fluide au sein d'un bioréacteur.

Bien que décrite en référence à cette application de mesure, l'invention peut être envisagée pour toute application de mesure de l'état d'un fluide (liquide, gaz) au sein d'un récipient tel qu'une cuve, plus particulièrement à parois opaques, dont les conditions d'utilisation mettent le fluide en mouvement global ou local. Il peut par exemple s'agir d'une cuve de production ou de décantation.

Dans le cas d'un fluide brassé au sein de la cuve, l'invention peut être mise à profit pour optimiser l'efficacité du brassage, notamment pour adapter la vitesse, la hauteur et/ou le type de turbine de brassage.

### Technique antérieure

Les réacteurs à cuve agitée, comme les bioréacteurs, sont largement utilisés dans de nombreux domaines de l'industrie chimique.

Dans le domaine de la bioproduction, la fabrication au sein de bioréacteurs de produits biologiques, qui sont des substances vivantes (vaccins, micro-algues, molécules pharmacologiques biologiques, etc...) ne peut pas être réalisée par un protocole complètement préétabli.

En effet, elle nécessite une adaptation permanente pour ajuster les paramètres physiques du fluide, tels que sa viscosité, sa vitesse de brassage, sa température, ainsi que sa teneur en bulles, en gaz, en nutriments, etc... à partir de paramètres mesurés imparfaits, qui consistent en des mesures biochimiques indirectes, comme le pH, et/ou valables uniquement localement et/ou incomplètes, etc....

L'étude de l'écoulement de fluide dans un bioréacteur est indispensable, afin d'apporter des informations clés pour le choix de la meilleure adaptation à apporter en temps réel. En particulier, la viscosité et, par corrélation, le nombre de Reynolds qui définit la nature d'un écoulement en fonction de sa vitesse et aussi de la viscosité du milieu qui s'écoule, est un paramètre qu'il est primordial de connaître.

Lorsque les cuves des réacteurs sont à parois transparentes, la mesure de l'état d'un fluide peut être obtenue par des moyens de mesure par observation indirecte effectuée depuis l'extérieur. Il peut s'agir de moyens optique, tels que des lasers, des caméras rapides, voire des observations visuelles, etc...

Or, bon nombre de bioréacteurs ont une cuve à parois opaques pour ne pas laisser pénétrer un flux lumineux ou pour des raisons de coût de l'équipement ou de robustesse. Cela écarte donc de facto les moyens de mesure indirects, précités.

En outre, il est généralement impossible ou interdit d'utiliser dans les bioréacteurs, des capsules de mesure se déplaçant librement au gré des mouvements permanents ou intermittents du fluide.

Il existe donc un besoin de trouver une solution de mesure fiable et précise de l'état d'un fluide, notamment de sa viscosité et/ou de son nombre de Reynolds, au sein d'un bioréacteur, notamment à parois opaques.

De manière plus générale, il existe un besoin de trouver une solution de mesure fiable et précise, et rapide de l'état d'un fluide (liquide, gaz) en mouvement ou non au sein d'une cuve, quelle qu'elle soit, notamment de décantation ou de production.

Le but de l'invention est de répondre, au moins en partie, à ce(s) besoin(s).

### Exposé de l'invention

Pour ce faire, l'invention concerne un palier de guidage d'axe central (X), comprenant :
- une bague, destinée à être montée serrée dans une structure de maintien, dont la surface interne est adaptée pour assembler avec un ajustement avec jeu, et de préférence guider en translation selon l'axe X, un tube destiné à constituer une perche de mesure;
- un élément d'angulation, formé intégralement ou fixé à l'intérieur de la surface interne de la bague en faisant saillie à l'intérieur de celle-ci, de sorte à former un axe d'angulation du tube par rapport à l'axe X;
- une pluralité de capteurs de pression, connectés entre eux et adaptés chacun pour mesurer un point de pression exercée par un point d'appui du tube dans une de ses positions angulées, les capteurs de pression étant répartis le long de la surface interne de la bague, de part et d'autre de l'élément d'angulation.

Une cuve peut être équipée d'un ou plusieurs tubes par exemple pour mettre en place des moyens de brassage du fluide, ou un moyen pour introduire des nutriments ou un gaz, ou toutes autres fonctions. En général, les perches sont fixes mais certaines peuvent être mobiles en rotation ou en translation et actionnées par des moteurs. Une perche peut être équipée d'une ou plusieurs sondes de mesure, notamment une sonde capable de réaliser des mesures électrochimiques.

L'invention se propose d'utiliser l'une quelconque de ces types de perches pour réaliser les mesures selon l'invention, dénommée dans ce but, perche de mesure.

L'élément d'angulation est un élément mécanique autorisant un rotulage.

Avantageusement, l'élément d'angulation est un joint torique.

Selon une variante de réalisation avantageuse, les capteurs de pression sont répartis en nombre égal de part et d'autre de l'élément d'angulation.

Selon une autre variante de réalisation avantageuse, les capteurs de pression sont logés individuellement ou par groupe dans des cavités de la surface interne de la bague et comprennent chacun une protubérance adaptée pour être en contact avec le point d'appui du tube.

Selon une première alternative de configuration, les capteurs de pression sont alignés selon une ou plusieurs droites parallèles à l'axe central (X).

Selon une deuxième alternative, les capteurs de pression sont agencés selon une surface, de sorte que lors d'une angulation du tube, les capteurs de pression entrent en contact séparément les uns après les autres avec le tube.

Selon une troisième alternative, les capteurs de pression sont agencés selon une surface, de sorte que lors d'une angulation du tube, les capteurs de pression entrent en contact les uns après les autres avec le tube, en cumulant la pression qu'ils détectent.

Avantageusement, les capteurs de pression sont au nombre de quatre, couplés par paire, pour chaque diamètre de la surface interne de bague sur lequel ils sont répartis.

Selon un mode de réalisation avantageux, le palier de guidage comprend au moins une cage à billes cylindrique ou conique, destinée à maintenir le tube, la cage à billes étant montée en étant maintenue à l'intérieur de la bague avec une portion sans billes en contact avec l'élément d'angulation et au moins une partie des billes formant chacune le point d'appui en contact avec un capteur de pression agencé dans la surface interne de la bague.

Selon un mode de réalisation avantageux, le palier de guidage comprend au moins un manchon monté en étant maintenu à l'intérieur de la bague, le manchon comprenant :
- des protubérances formant chacune le point d'appui en contact avec un capteur de pression agencé dans la surface interne de la bague, et/ou
- au moins une partie des capteurs de pression répartis le long de sa surface externe.

De préférence, les capteurs de pression sont des capteurs piézoélectriques.

L'invention a encore pour objet un système de mesure de la viscosité ou du nombre de Reynolds d'un fluide contenu dans un récipient, tel qu'une cuve, notamment à parois opaques, comprenant :
- au moins un palier de guidage tel que décrit précédemment, monté serré dans une paroi du récipient,
- une perche de mesure formant le tube, assemblée par ajustement avec jeu dans la bague du palier de guidage et dont une extrémité, libre, est destinée à être immergée dans le fluide,
- au moins un moyen de fixation de l'autre extrémité de la perche de mesure, le moyen étant adapté pour limiter l'angulation de la perche de mesure dans la bague.

Selon un mode de réalisation avantageux, le système comprend un manchon formant un adaptateur de diamètre dans lequel est monté serré la perche de mesure et qui est assemblé par ajustement avec jeu avec la bague.

Selon ce mode, l'adaptateur de diamètre comprend de préférence, sur sa surface externe, une pluralité de protubérances formant chacune le point d'appui en contact avec un capteur de pression agencé dans la surface interne de la bague.

De préférence, le capteur électrochimique est fixé à l'extrémité libre de la perche de mesure.

L'invention a encore pour objet une cuve de décantation ou de production, notamment d'un bioréacteur, comprenant un système tel que décrit précédemment.

L'invention a encore pour objet l'utilisation d'un système de mesure tel que décrit précédemment ou d'un bioréacteur tel que décrit ci-avant pour le suivi d'une bioproduction.

L'invention consiste donc essentiellement en un palier de guidage comprenant une bague dans laquelle une perche de mesure est montée avec ajustement avec jeu, le palier intégrant un élément d'angulation de la perche de mesure au sein de la bague.

L'élément d'angulation permet de créer un appui d'angulation ou autrement dit un appui-pivot de la perche de mesure de sorte à stabiliser les mouvements relatifs par rapport à la bague et à répartir de part et d'autre dudit appui, les efforts subis par la perche lorsqu'elle est immergée dans un fluide dont on cherche à mesurer la viscosité ou le nombre de Reynolds.

Le palier est instrumenté par plusieurs capteurs de pression répartis le long de la surface interne de la bague qui vont mesurer différentes pressions de la perche lorsqu'elle va prendre des positions angulées en fonction de la pression du fluide appliquée à l'extrémité libre de la perche.

La répartition des capteurs de pression est avantageusement réalisée de sorte à les répartir en nombre égal de part et d'autre de l'élément d'angulation. Cette répartition permet de symétriser les mesures de pression par rapport à l'appui d'angulation et donc rend possible des mesures moyennées ou différentielles.

Les capteurs de pression sont connectés entre eux, avantageusement sous la forme d'une matrice ligne-colonne ou d'une configuration de réseau dite « Daisy chain », en formant une connectique reliée à un moyen de lecture électronique (analogique ou numérique) suivi d'une numérisation.

Les capteurs peuvent être standards dans la mesure où ils sont précis et à faible encombrement. Par exemple, les capteurs commercialisés par la société Wormsensing (https://www.wormsensing.com/) peuvent être mis en oeuvre à la fois pour des bagues de grandes dimensions ou de dimension plus faibles, adaptées à des perches de mesure de petit diamètre.

Pour chaque cas d'usage, c'est-à-dire d'un fluide donné dans certaines conditions, on peut définir une loi qui relie la position de chaque point d'appui d'une perche de mesure sur un capteur de pression à l'angulation de la perche. L'angle maximal de la perche étant contraint par un moyen de fixation ad hoc, par exemple un joint de cardan et/ou une butée radiale, il informe sur la pression globale subie par la perche.

Ainsi, la spatialisation de la mesure de pressions à l'intérieur d'un palier de guidage d'une perche de mesure permet d'analyser l'état de pression d'un fluide dans lequel est immergé la perche, qui est à distance du palier.

Pour l'analyse proprement dite, une méthode d'interpolation peut être mise en oeuvre.

On peut aussi mettre en oeuvre une méthode d'intelligence artificielle, par classification pour déterminer et discriminer les différents états de pression accumulés et mélangés dans les données mesurées. Les classes créées peuvent être réalisées en fonction principalement de deux groupes de mesure, à savoir un groupe de plusieurs classes associées à une discrétisation des niveaux moyens de pression et un groupe caractérisant les fluctuations rapides de pression autour des niveaux discrets de pression.

On peut ainsi déterminer le régime de Reynolds et/ou le niveau de viscosité du fluide.

En corollaire de l'analyse des données mesurées par le palier de guidage selon l'invention on peut piloter de manière dynamique, en temps réel, c'est-à-dire pendant l'exécution d'un processus industriel qui utilise un fluide, le choix entre plusieurs paramétrages ou plusieurs configurations d'un système de régulation des conditions du fluide, par exemple d'un système de contrôle-commande agissant par exemple sur une turbine de brassage ou d'un système de bullage. Cela peut intervenir notamment en raison d'une variation importante de la viscosité du fluide ou d'un manque d'oxygénation.

Ce pilotage dynamique peut être mis en oeuvre au moyen d'un jumeau numérique. En fonction des variables d'environnement, fournies par la méthode de classification selon les données de mesure du palier selon l'invention, le jumeau numérique peut effectuer de nouvelles simulations. Ces simulations peuvent être réalisées par exemple par éléments finis. Le jumeau numérique peut aussi changer le modèle de calcul, par exemple par la réduction de l'ordre des modèles (MOR acronyme anglo-saxon pour « Model Order Réduction ») qui est une technique permettant de réduire la complexité de calcul des modèles mathématiques dans les simulations numériques.

Au final, l'invention apporte plusieurs avantages, parmi lesquels on peut citer :
- définition d'une loi qui relie la pression et l'angulation d'une perche de mesure par définition des points d'appui de la perche et la fabrication possible sur mesure de la surface d'agencement des capteurs de pression associée. La bague de guidage instrumentée est sensible aux appuis de la perche, qui réalisent des efforts en compression, sur les points définis et est insensible aux efforts en traction et aux efforts tangentiels sur ces points. La bague est de plus intrinsèquement insensible aux efforts axiaux. Cela permet de corréler le comportement mesuré avec des efforts également radiaux soumis par le fluide sur la perche de mesure ;
- la détermination de l'ordre de grandeur des pressions subies par la perche de mesure dans une gamme de pression ;
- la détermination du régime d'un écoulement de fluide autour d'une perche de mesure, défini par son nombre de Reynolds et/ou sa viscosité ;
- la réalisation de mesures précises, même dans un encombrement réduit ou de récipients (cuves) contenant le fluide à mesurer, qui ne sont pas brassés ou dont le brassage est non turbulent. Dans de telles conditions, un changement peut être mesuré en valeur moyenne globale de pression et/ou en répartition spatiale des pressions relevées par les capteurs, qui joue le rôle d'indicateur de l'état du milieu (pression statique devenant élevée, turbulences élevées, ...).
- la possibilité d'estimation du champ de pression tridimensionnel du fluide sur la perche de mesure et éventuellement, partiellement, autour d'une partie de la perche immergée. Dans les meilleures configurations, l'information recueillie est une image directe et fidèle de la répartition spatiale des pressions appliquées par le fluide sur la partie distante (et immergée) de la perche de mesure. Dans ce cas il est nécessaire de réaliser au préalable une simulation numérique détaillée de la perche, du fluide, des interactions entre la perche et le fluide par calculs FSI (« Fluid-Structure-Interaction ») ou CFD (« Computational Fluid Dynamics »), du palier de guidage instrumenté et notamment de l'arrangement spécifique de la surface des

capteurs. Les données spatialisées permettent de calibrer la réponse spatiale sur la surface d'agencement des capteurs au sein de la bague, ce qui permet ensuite de définir le champ de pression tridimensionnel du fluide qui produit cette réponse.
- la possibilité d'utiliser le suivi spatialisé des pressions mesurées par le palier, comme un outil utile dans un jumeau numérique du récipient, tel qu'une cuve, qui contient le fluide dans lequel est immergée la perche de mesure.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique de la mise en oeuvre d'une perche du système de mesure de l'état physique d'un fluide dans un récipient, selon l'invention.
[Fig 2] la figure 2 est une vue schématique d'une perche du système de mesure selon l'invention avec son moyen de liaison à limitation d'angulation dont l'extrémité distale est à angulation nulle éventuellement équipée d'un moteur d'entraînement en translation ou rotation.
[Fig 3] la figure 3 est une vue schématique d'une variante de la figure 2.
[Fig 4] la figure 4 illustre, sous forme d'une courbe, l'augmentation de l'angle moyen d'une perche de mesure dont une partie est immergée dans un fluide qui exerce un niveau donné de pression sur ladite partie immergée et les fluctuations autour des niveaux moyens provenant des vibrations dans la perche, qui sont induites par les fluctuations de la pression dynamique dans le fluide.
[Fig 5] la figure 5 est une vue en coupe longitudinale d'un palier de guidage instrumenté selon l'invention avec sa bague de guidage dans laquelle une perche de mesure est montée avec ajustement avec jeu.
[Fig 6] la figure 6 est une vue en coupe longitudinale d'un mode de réalisation avantageux du palier de guidage dont la surface interne de la bague présente un profil adapté à la mesure de pressions pour un fluide donné.
[Fig 7] la figure 7 est une vue en coupe longitudinale d'une première variante de réalisation avantageuse du palier de guidage comprenant une cage à billes à l'intérieur de la bague de guidage.
[Fig 8] la figure 8 est une vue en coupe longitudinale d'une autre variante de réalisation avec la perche de mesure montée serré dans un adaptateur de mesure lui-même monté avec ajustement avec jeu dans la bague de guidage.
[Fig 9] la figure 9 est une vue en coupe longitudinale d'une deuxième variante de réalisation avantageuse du palier de guidage comprenant un manchon à protubérances d'appui, à l'intérieur de la bague de guidage.
[Fig 10] la figure 10 est une vue en coupe longitudinale d'une troisième variante de réalisation avantageuse du palier de guidage comprenant un manchon doté lui-même de capteurs de pression, à l'intérieur de la bague de guidage.
[Fig 11] la figure 11 est une vue en coupe longitudinale d'une autre variante de réalisation avec un manchon ou adaptateur de diamètre, de forme conique, à l'intérieur de la bague de guidage.
[Fig 12] la figure 12 est une vue en coupe longitudinale d'une autre variante de réalisation avec une cage cylindrique à billes de diamètres différents, à l'intérieur de la bague de guidage.
[Fig 13] la figure 13 est une vue en coupe longitudinale d'une autre variante de réalisation avec une cage conique à billes de diamètres différents, à l'intérieur de la bague de guidage.
[Fig 14] la figure 14 est une vue schématique d'un autre mode de réalisation d'un système de mesure selon l'invention.

### Description détaillée

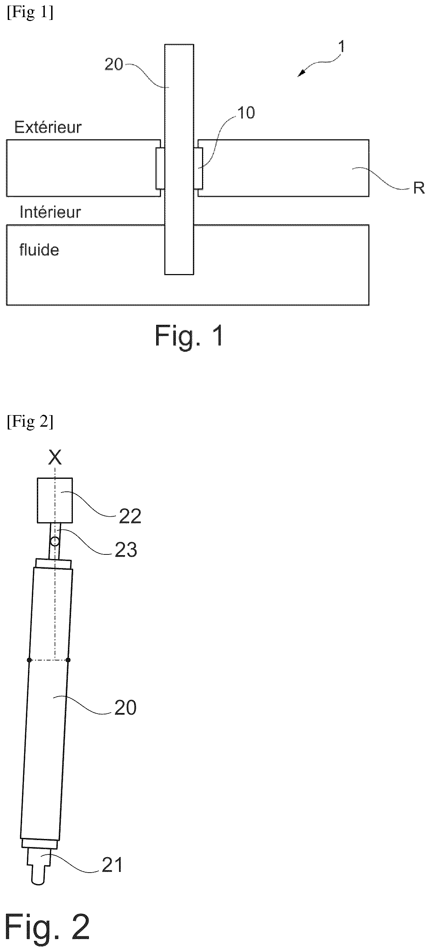

Par souci de clarté, les mêmes références désignant les mêmes éléments selon l'invention sont utilisées pour toutes les figures 1 à 14.

Les dessins et l'agencement des différents éléments entre eux ne sont pas représentés à l'échelle.

Dans l'ensemble de la présente demande, les termes « dessus », « dessous», « inférieur » et « supérieur » sont à comprendre par référence au système de mesure selon l'invention tel qu'il est dans une configuration d'installation avec le palier de guidage agencé à la verticale.

On a illustré à la figure 1 un système de mesure 1 de la viscosité ou du nombre de Reynolds d'un fluide contenu dans un récipient R, tel qu'une cuve, notamment à parois opaques. Il peut s'agir de la cuve d'un bioréacteur contenant un fluide de bioproduction dont on cherche à connaître et maitriser les conditions de brassage.

Le système 1 comprend un palier de guidage 10, monté serré dans une paroi du récipient R, qui est instrumenté par plusieurs capteurs de pression répartis spatialement le long du palier, comme expliqué ci-après. Comme illustré, le palier 10 peut être monté à la verticale dans une paroi supérieure, notamment le couvercle du récipient R.

Une perche de mesure 20 est assemblée par ajustement avec jeu dans le palier de guidage 10 pour permettre à la fois un guidage en translation et autoriser une angulation de la perche.

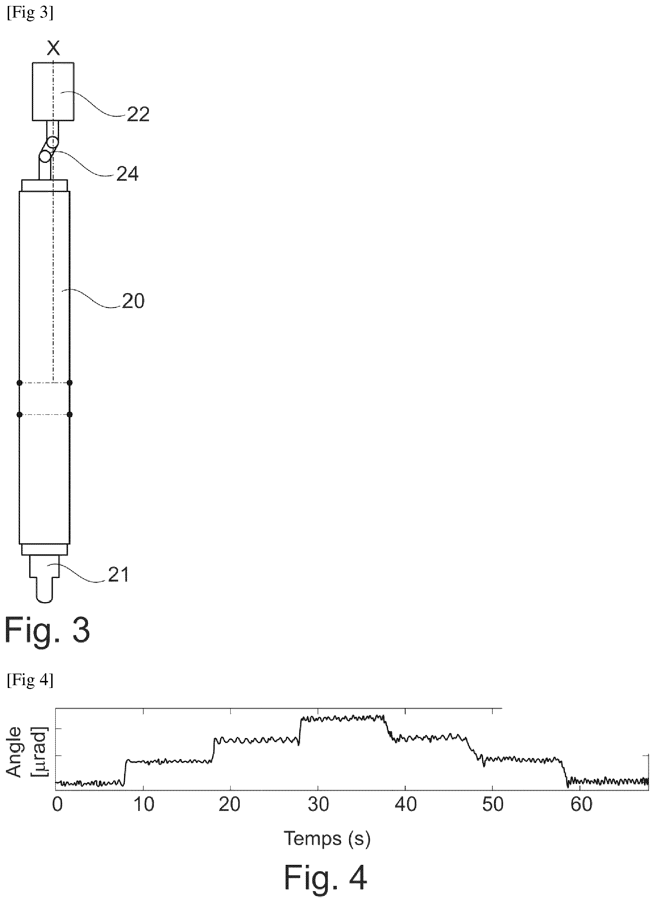

L'extrémité inférieure, libre, de la perche 20 est immergée dans le fluide contenu dans le récipient R, dont on cherche à mesurer la viscosité ou le nombre de Reynolds. Comme illustré en figures 2 et 3, l'extrémité inférieure de la perche peut supporter un ou plusieurs capteurs électrochimiques 21 qui servent à déterminer des propriétés chimiques du fluide.

L'extrémité supérieure de la perche de mesure est fixée par un moyen de fixation qui est adapté pour limiter l'angulation de la perche dans le palier de guidage 10.

Cette limitation d'angulation va permettre d'augmenter la gamme de pression du fluide qui va pouvoir être mesurée par le palier de guidage 10 instrumenté.

En tant que moyen de fixation de la perche, on privilégie ceux qui favorisent les mouvements de translation de la perche 20 dans le palier 10 plutôt que de rotation au niveau de la fixation.

Dans le cas où l'on ne souhaite pas brider les mouvements d'oscillation de la perche de mesure, fixe ou rendue mobile au moyen d'un moteur d'entraînement, on peut mettre en oeuvre des solutions de fixation par cardan.

Un tel exemple de fixation est montré à la figure 2 : l'extrémité supérieure de la perche 20 est reliée à un moteur d'entraînement en rotation 22, d'axe confondu avec l'axe central X du palier de guidage 10, par un simple cardan 23.

Une variante est illustrée à la figure 3 : la liaison entre le moteur 22 et la perche 20 peut être réalisée par un double cardan 24, qui a l'avantage d'atténuer les mouvements de balancier de la perche dans le fluide.

On peut aussi envisager d'autres moyens de limitation d'angulation, tels qu'une butée radiale qui peut par exemple être implantée directement dans la paroi dans laquelle est montée le palier de guidage 10. Au contact de la butée, les mesures selon l'invention perdent leur sens.

La courbe de la figure 4 illustre d'une part, l'augmentation de l'angle moyen pris par une perche de mesure 20 avec un niveau donné de pression exercée sur la partie immergée de la perche, et d'autre part les fluctuations autour des niveaux moyens provenant des vibrations dans la perche, qui sont induites par les fluctuations de la pression dynamique dans le fluide.

Le jeu d'assemblage entre le palier de guidage 10 et la perche de mesure 20 permet d'amplifier les fluctuations mesurables autour des niveaux moyens. Ainsi que la gamme de pression du fluide qui peut être mesurée par le palier de guidage 10 instrumenté avec une spatialisation de ses capteurs de pression.

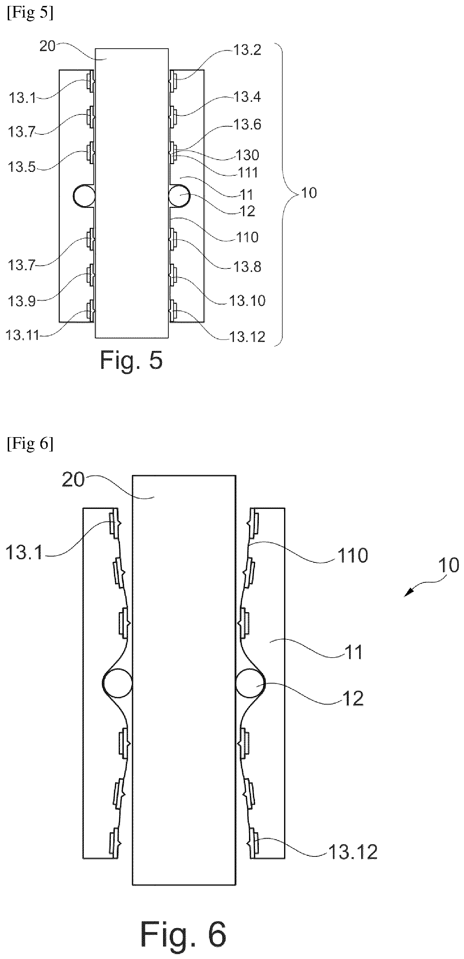

Un palier de guidage 10 d'axe central X selon un exemple de l'invention est montré en détail à la figure 5.

Il comprend tout d'abord une bague 11 qui est le composant destiné à être monté serré dans la paroi du récipient R, dont la surface interne 110 est assemblée avec un ajustement avec jeu et permet de guider en translation selon l'axe X la perche de mesure 20.

Le palier de guidage 10 comprend également un élément d'angulation 12 configuré pour permettre à la perche 20 de prendre une pluralité de positions angulées par rapport à l'axe central X du palier. Cet élément d'angulation peut être tout élément mécanique autorisant au minimum un rotulage. Par exemple, cet élément d'angulation peut être un joint torique, un palier à rotule, un roulement à rotule, ou tout autre élément mécanique connu de l'homme de l'art et compatible avec l'invention.

Selon l'exemple illustré, un joint torique 12, de préférence en matériau dur et lisse, est fixé à l'intérieur de la surface interne 110 de la bague en faisant saillie à l'intérieur de celle-ci, de sorte à former un axe d'angulation de la perche 20 par rapport à l'axe X. Autrement dit, le joint torique 12 est un appui-pivot qui permet à la fois de stabiliser les mouvements relatifs entre la perche de mesure 20 et la bague 10 et de répartir de part et d'autre, les efforts de pression subis par la perche dans la partie immergée du fluide.

Une pluralité de capteurs de pression 13.1 à 13.12 sont logés individuellement dans des cavités 111 de la surface interne 110 de la bague 11. Chacun de ces capteurs 13.1 à 13.12 comprend une protubérance 130 adaptée pour être en contact et donc mesurer une valeur de pression exercée par le fluide sur une zone d'appui de la perche induisant une de ses positions angulées.

Les capteurs 13.1 à 13.12 peuvent être standards dans la mesure où ils sont précis et à faible encombrement. Par exemple, les capteurs commercialisés par la société Wormsensing (https://www.wormsensing.com/) peuvent être mis en oeuvre à la fois pour des bagues de grandes dimensions ou de dimension plus faibles, adaptées à des perches de mesure de petit diamètre.

Comme illustré, les capteurs de pression sont de préférence répartis en nombre égal de part et d'autre du joint torique 12. Ainsi, les mesures de pression peuvent être symétrisées, i.e. les mesures des capteurs 13.1, 13.3, 13.5 sont symétrisées avec celles des capteurs 13.8, 13.10, 13.12 et les mesures des capteurs 13.2, 13.4, 13.6 sont symétrisées avec celles des capteurs 13.7, 13.9, 13.11. Avec cette symétrie de mesures de pression, on peut déterminer des mesures moyennes ou différentielles.

Sur la figure 5, les capteurs de pression sont tous agencés selon une surface interne 110 de la bague qui est rectiligne, parallèle à l'axe X. Cet agencement peut convenir dans certaines applications.

De manière avantageuse, on peut envisager de réaliser un profil de surface interne 110 de la bague 11 qui permet d'optimiser la spatialisation de mesures de pression et de construire pour chaque cas d'usage du fluide et de ses conditions dans le récipient R, la loi qui relie la position de chaque point de contact avec un capteur de pression 13.1 à 13.12 et l'angulation de la perche de mesure 20.

Pour définir le profil adéquat, on peut utiliser un outil numérique de génération de surfaces qui permet de créer le profil virtuel. On peut utiliser un outil d'interpolation permettant de créer et de décrire des courbes (dites de Bézier) polynomiales et paramétriques à une ou deux dimensions (lignes ou surfaces) à partir de quelques points et de quelques paramètres (des angles, des longueurs, des distances).

Pour un diamètre donné de perche de mesure, on peut réaliser des profils dédiés et une surface virtuelle globale peut être générée en fonction des gammes d'angulation autorisées pour la perche de mesure. La surface virtuelle globale peut être rendue identique pour des diamètres différents notamment au moyen d'un adaptateur ; la surface virtuelle globale étant alors conçue pour le diamètre envisagé le plus grand.

Une fois le profil adéquat défini on peut réaliser la fabrication de la bague 11, en 2D puis roulée ou en 3D par fabrication additive, ou par usinage numérique ou autre. Si un moyen d'adaptation a été prévu, il peut être fabriqué séparément et être amovible ou faire partie de la fabrication de la bague qui deviendra ainsi dédiée pour un diamètre donné.

Deux variantes peuvent être envisagées pour cette optimisation de surface interne de bague.

La première consiste à réaliser une surface interne 110 telle que lors d'une angulation de la perche 20, les capteurs de pression 13.1 à 13.12 entrent en contact séparément les uns après les autres avec la perche 20. Cela permet de réaliser une subdivision de la gamme de pression qui s'établit au fur et à mesure.

La deuxième consiste à réaliser une surface interne 110 de sorte que lors d'une angulation de la perche 20, les capteurs de pression 13.1 à 13.12 entrent en contact les uns après les autres avec la perche, en cumulant la pression qu'ils détectent. Cette variante permet de favoriser d'élargir la gamme de pression qu'il est possible de mesurer, en augmentant progressivement une résistance à la pression selon des efforts pouvant devenir non linéaires. Cela peut être particulièrement adapté à certains usages.

Un exemple d'une surface interne 110 optimisée est montré à la figure 6. On voit que le profil de la surface interne 110 suit une courbe définie sur laquelle les différents capteurs 13.1 à 13.12 sont agencés.

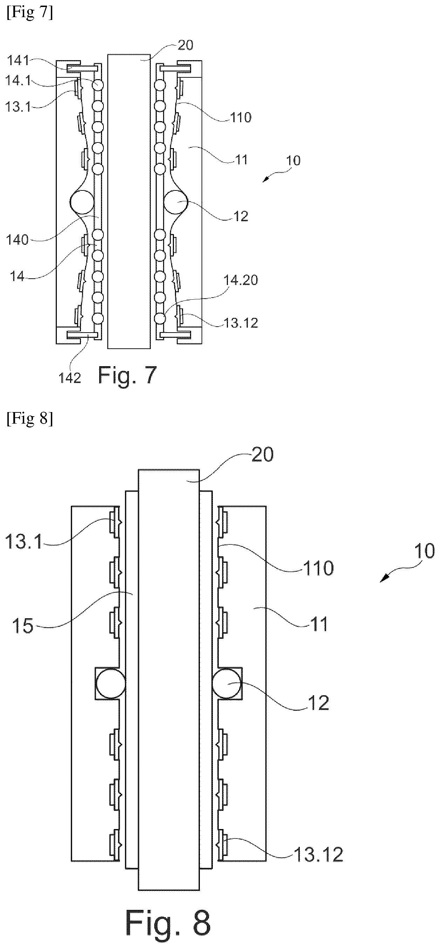

Un mode de réalisation avantageux du palier de guidage 10 est illustré à la figure 7.

Une cage à billes cylindrique 14 est montée en étant maintenue à l'intérieur de la bague 11. Une portion 140 sans billes de la cage est en contact avec le joint torique 12. Le maintien de la bague 14 peut être réalisé par des bagues d'arrêt 141, 142, agencées respectivement en haut et en bas de la bague 11. Ces bagues d'arrêt limitent l'étendue des oscillations orthogonales à l'axe X. Les déplacements en translation ou en rotation de la perche sont rendus possibles ou facilités par la cage à billes 14 sans perturber les mesures.

Au moins une partie des billes 14.1 à 14.20 forme chacune le point d'appui en contact avec un capteur de pression 13.1 à 13.12 agencé dans la surface interne 110 de la bague.

On peut prévoir un nombre de billes correspondant à celui des capteurs et agencer ces billes de sorte à ce que chacune d'entre elles forme un point d'appui de la perche sur un des capteurs de pression. Les billes peuvent être calibrées selon un diamètre unique.

Comme illustré sur cette figure 7, de manière alternative, on peut prévoir que seule une partie des billes forme des points d'appui. Avec la possibilité de rotation de la perche permise par la cage à billes, cela permet de créer une cadence ou de rendre aléatoires les appuis avec les capteurs de pression, et également de prolonger la durée de vie des billes.

D'autres variantes et améliorations peuvent être envisagées sans pour autant sortir du cadre de l'invention.

Une variante illustrée à la figure 8 peut consister à monter une perche de mesure 20 de diamètre plus faible dans un adaptateur de diamètre 15 qui est lui-même en appui-pivot contre le joint torique 12 et est monté avec ajustement avec jeu dans la bague de guidage 10.

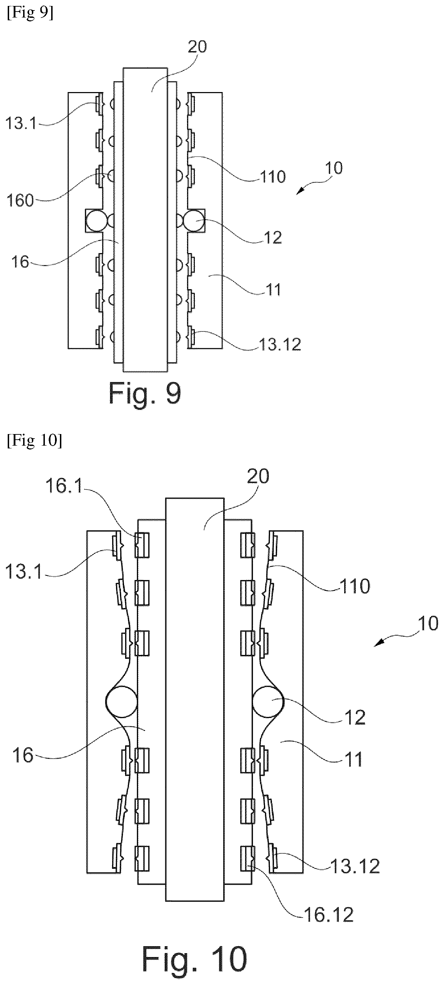

Une autre variante illustrée à la figure 9 peut consister à monter une perche de mesure 20 de diamètre plus faible dans un manchon cylindrique 16 qui est lui-même en appui-pivot contre le joint torique 12 et est monté avec ajustement avec jeu dans la bague de guidage 10. Ce manchon 16 comprend des protubérances formant chacune un point d'appui en contact avec un capteur de pression 13.1 à 13.12 agencé dans la surface interne 110 de la bague 11. Les protubérances 160 peuvent être de dimensions différentes pour réaliser un profil de surface de pression graduée. Ce manchon cylindrique 16 peut être un adaptateur de diamètre.

Une autre variante illustrée à la figure 10 peut consister à monter une perche de mesure 20 de diamètre plus faible dans un autre manchon cylindrique 16 qui est lui-même en appui-pivot contre le joint torique 12 et est monté avec ajustement avec jeu dans la bague de guidage 10. Ce manchon 16 comprend des capteurs de pression 16.1 à 16.12 formant chacun un point d'appui en contact avec un capteur de pression 13.1 à 13.12 agencé dans la surface interne 110 de la bague 11. On peut aussi prévoir de ne pas équiper la surface interne 110 de la bague 10 de capteurs de pression, les capteurs de pression 16.1 à 16.12 répartis à l'intérieur du manchon 16, le long de la surface interne 110 de la bague 12 venant alors directement en contact avec cette dernière. Ce manchon cylindrique 16 peut également être un adaptateur de diamètre.

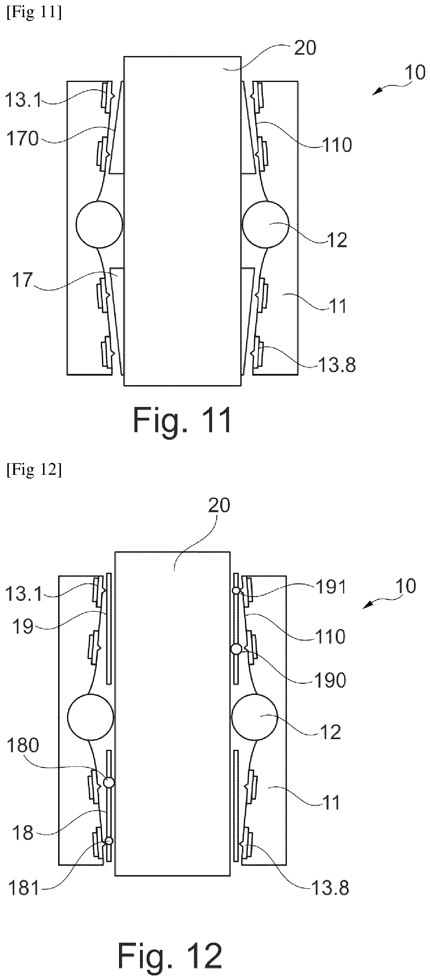

Une autre variante illustrée à la figure 11 peut consister à monter une perche de mesure 20 de diamètre plus faible dans un manchon 17 qui est lui-même en appui-pivot contre le joint torique 12 et est monté avec ajustement avec jeu dans la bague de guidage 10. La surface externe 170 du manchon 17 peut ne pas être cylindrique et être réalisée selon un profil qui contribue à construire la loi de spatialisation de la gamme de pression mesurée par les capteurs 13.1 à 13.8. Ce manchon non cylindrique 17 peut également être un adaptateur de diamètre.

Dans le mode de réalisation avec cage à billes, en lieu et place d'une seule cage monobloc 14 montée dans la bague de guidage 10 comme illustré à la figure 7, on peut envisager d'assembler deux cages à billes agencées de part et d'autre du joint torique avec un espace entre elles de sorte que ce dernier soit en appui-pivot directement avec la perche de mesure 20.

La variante illustrée à la figure 12 montre une telle réalisation à deux cages à billes cylindriques 18, 19 de part et d'autre du joint torique 12. En outre, on peut adapter la taille des billes en fonction de leur position selon l'axe X. Par exemple comme illustré, les billes de plus gros diamètre 180, 190 peuvent être celles les plus proches de l'appui-pivot 12 et celles de petit diamètre 181, 191 positionnées en regard des extrémités de la bague 11.

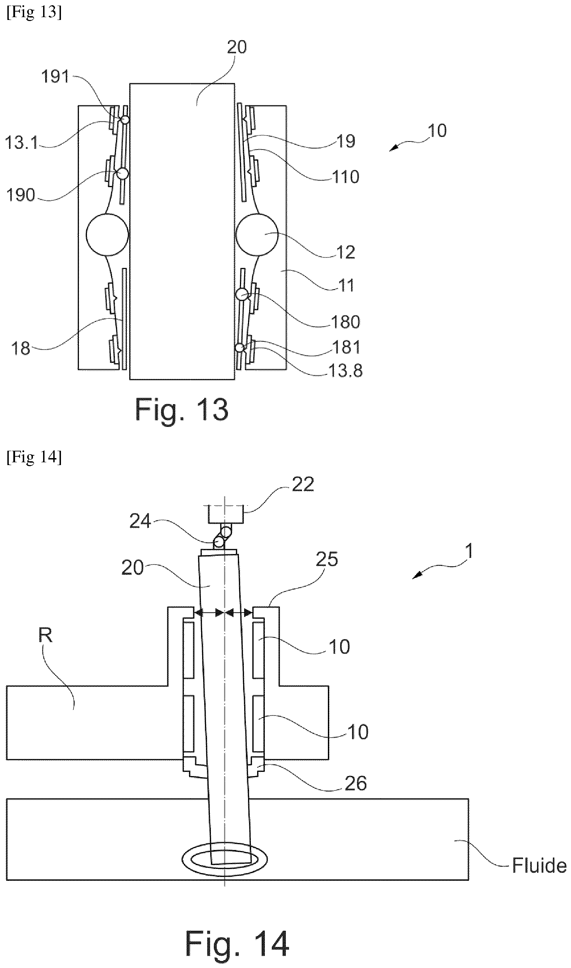

En lieu et place de cages à billes cylindriques, on peut agencer des cages à billes 18, 19 de forme conique comme montré à la figure 13.

La figure 14 illustre un mode de réalisation avantageux du système de mesure 1 complet de la viscosité ou du nombre de Reynolds d'un fluide contenu dans un récipient R.

Une liaison double- cardan 24 lie l'extrémité supérieure de la perche 20 de mesure.

Pour améliorer le guidage en translation selon l'axe X de la perche 20 et ajuster la longueur d'agencement des capteurs de pression, deux paliers de guidage 10 instrumentés selon l'invention, sont montés serrés dans la paroi du récipient, à distance l'un de l'autre. Le guidage en translation est amélioré car les frottements peuvent être ajustés et/ou supprimés.

On peut prévoir également une butée radiale 25 supplémentaire qui limite le débattement angulaire de la perche 20. Cette butée radiale 25 peut en outre avoir une fonction de protection anti-choc et/ou anti-usure excessive.

Enfin, au moins un joint racleur 26 peut être fixé sur la paroi du récipient R et/ou sur la perche de mesure de sorte à éviter tout risque de pollution par le milieu au sein du récipient ; du ou des paliers de guidage 10 instrumentés.

Dans les exemples illustrés, le nombre de capteurs de pression utilisés est égal à 8 ou 12, répartis en nombre égal de part et d'autre de l'élément d'angulation (par exemple réalisé par un joint torique). On peut bien évidemment instrumenter le palier de guidage avec un nombre inférieur ou supérieur en fonction de la spatialisation de mesure de pressions que l'on souhaite.

## Revendications

1. Palier de guidage (10) d'axe central (X), comprenant :
- une bague (11), destinée à être montée serré dans une structure de maintien, dont la surface interne est adaptée pour assembler avec un ajustement avec jeu, et de préférence guider en translation selon l'axe X, un tube destiné à constituer une perche de mesure;
- un élément d'angulation (12), formé intégralement ou fixé à l'intérieur de la surface interne de la bague en faisant saillie à l'intérieur de celle-ci, de sorte à former un axe d'angulation du tube par rapport à l'axe X;
- une pluralité de capteurs de pression (13.1-13.12) adaptés chacun pour mesurer un point de pression exercée par un point d'appui du tube dans une de ses positions angulées, les capteurs de pression étant répartis le long de la surface interne de la bague, de part et d'autre de l'élément d'angulation.

2. Palier de guidage selon la revendication 1, l'élément d'angulation étant un élément mécanique autorisant un rotulage.

3. Palier de guidage selon la revendication 1 ou 2, l'élément d'angulation étant un joint torique.

4. Palier de guidage selon l'une des revendications 1 à 3, les capteurs de pression étant répartis en nombre égal de part et d'autre de l'élément d'angulation.

5. Palier de guidage selon l'une des revendications précédentes, les capteurs de pression étant logés individuellement ou par groupe dans des cavités de la surface interne de la bague et comprenant chacun une protubérance adaptée pour être en contact avec le point d'appui du tube.

6. Palier de guidage selon l'une des revendications précédentes, les capteurs de pression étant alignés selon une ou plusieurs droites parallèles à l'axe central (X).

7. Palier de guidage selon l'une des revendications 1 à 5, les capteurs de pression étant agencés selon une surface, de sorte que lors d'une angulation du tube, les capteurs de pression entrent en contact séparément les uns après les autres avec le tube.

8. Palier de guidage selon l'une des revendications 1 à 5, les capteurs de pression étant agencés selon une surface, de sorte que lors d'une angulation du tube, les capteurs de pression entrent en contact les uns après les autres avec le tube, en cumulant la pression qu'ils détectent.

9. Palier de guidage selon l'une des revendications précédentes, les capteurs de pression étant au nombre de quatre, couplés par paire, pour chaque diamètre de la surface interne de bague sur lequel ils sont répartis.

10. Palier de guidage selon l'une des revendications précédentes, comprenant au moins une cage à billes cylindrique ou conique, destinée à maintenir le tube, la cage à billes étant montée en étant maintenue à l'intérieur de la bague avec une portion sans billes en contact avec l'élément d'angulation et au moins une partie des billes formant chacune le point d'appui en contact avec un capteur de pression agencé dans la surface interne de la bague.

11. Palier de guidage selon l'une des revendications 1 à 9, comprenant au moins un manchon monté en étant maintenu à l'intérieur de la bague, le manchon comprenant :
- des protubérances formant chacune le point d'appui en contact avec un capteur de pression agencé dans la surface interne de la bague, et/ou
- au moins une partie des capteurs de pression répartis le long de sa surface externe.

12. Palier de guidage selon l'une des revendications précédentes, les capteurs de pression étant des capteurs piézoélectriques.

13. Système de mesure de la viscosité ou du nombre de Reynolds d'un fluide contenu dans un récipient, tel qu'une cuve, notamment à parois opaques, comprenant :
- au moins un palier de guidage selon l'une des revendications précédentes, monté serré dans une paroi du récipient,
- une perche de mesure formant le tube, assemblée par ajustement avec jeu dans la bague du palier de guidage et dont une extrémité, libre, est destinée à être immergée dans le fluide,
- au moins un moyen de fixation de l'autre extrémité de la perche de mesure, le moyen étant adapté pour limiter l'angulation de la perche de mesure dans la bague.

14. Système de mesure selon la revendication 13, comprenant un manchon formant un adaptateur de diamètre dans lequel est monté serré la perche de mesure et qui est assemblé par ajustement avec jeu avec la bague.

15. Système de mesure selon la revendication 14, l'adaptateur de diamètre comprenant, sur sa surface externe, une pluralité de protubérances formant chacune le point d'appui en contact avec un capteur de pression agencé dans la surface interne de la bague.

16. Système de mesure selon l'une des revendications 13 à 15, le capteur électrochimique étant fixé à l'extrémité libre de la perche de mesure.

17. Cuve de décantation ou de production, notamment d'un bioréacteur, comprenant un système selon l'une des revendications 13 à 16.

18. Utilisation d'un système de mesure selon l'une des revendications 13 à 16 ou d'un bioréacteur selon la revendication 17 pour le suivi d'une bioproduction.
